# FASCICULE DE BREVET EUROPEEN

(11) **EP 1 201 892 B1**
(45) Date de publication et mention de la délivrance du brevet: **01.02.2006**
(21) Numéro de dépôt: 01125051.1
(22) Date de dépôt: 22.10.2001
(51) Int. Cl.: F02B 41/06

(54) **Moteur à combustion interne à cinq temps**
Fünftakt Brennkraft Maschine
Five stroke internal combustion engine

(30) Priorité: 26.10.2000 BE 200000684
(43) Date de publication de la demande: 02.05.2002
(73) Titulaire: Schmitz, Gerhard, 4780 Saint-Vith (BE)
(72) Inventeur: Schmitz, Gerhard, 4780 Saint-Vith (BE)
(74) Mandataire: Cauchie, Daniel

(56) Documents cités:
- EP-A- 0 302 042
- FR-A- 612 099
- FR-A- 1 058 109
- FR-A- 1 091 774
- FR-A- 2 474 584
- US-A- 3 312 206
- PATENT ABSTRACTS OF JAPAN vol. 012, no. 222 (M-712), 24 juin 1988 (1988-06-24) & JP 63 018131 A (NIPPON RADIATOR CO LTD), 26 janvier 1988 (1988-01-26)

## Description

La présente invention concerne un procédé de réalisation d'un un moteur à combustion interne du type comprenant au moins un cylindre qui comporte une chambre de travail de volume variable par le déplacement dans celui-ci d'un piston entre une position de point mort haut et une position de point mort bas, sous l'effet de forces de pression engendrées périodiquement dans cette chambre, à chaque cylindre étant associés des moyens d'admission et d'évacuation d'un fluide gazeux, le piston de chaque cylindre étant relié à un vilebrequin du moteur.

Elle concerne également un moteur pour la mise en oeuvre de ce procédé.

Plus précisément, l'invention concerne un moteur à combustion interne du type comprenant au moins un cylindre qui comprend une chambre de travail de volume variable par le déplacement dans le cylindre d'un piston entre une position de point mort haut et une position de point mort bas, sous l'effet de forces de pression engendrées périodiquement dans ladite chambre, à chaque cylindre étant associés des moyens d'admission et d'évacuation d'un fluide gazeux, le piston de chaque cylindre étant relié à.un arbre vilebrequin du moteur, ledit moteur comprenant :
- d'une part, un cylindre fonctionnant en cylindre basse pression suivant un mode du type deux temps, qui comprennent l'admission accompagnée de la détente produisant un travail utile au cours de chaque course du piston du cylindre basse pression vers son point mort bas et l'échappement d'un fluide gazeux au cours de chaque course du piston vers son point mort haut et,
- d'autre part, deux cylindres fonctionnant en cylindres comburants suivant un mode du type quatre temps, qui comprennent l'admission de l'air ou d'un mélange air-combustible au cours de la première course du piston de chacun des cylindres comburants vers son point mort bas, la compression de cet air ou du mélange air-combustible dans le cylindre comburant au cours de la première course du piston vers son point mort haut, survie de la combustion, la détente des gaz comburés au cours de la deuxième course du piston vers son point mort bas produisant un travail utile et le refoulement des gaz comburés au cours de la deuxième course du piston vers son point mort haut, le cylindre basse pression pouvant communiquer avec les deux cylindres comburants par respectivement au moins une soupape et une tubulure de transvasement, la cylindrée de chacun des cylindres comburants étant inférieure à celle du cylindre basse pression, les cylindres comburants refoulant alternativement leurs gaz comburés vers le cylindre basse pression en vue d'une deuxième détente des gaz comburés et de leur échappement du moteur,
- et un moyen de suralimentation des cylindres comburants constitué d'un turbo-compresseur, le rapport de compression volumétrique des cylindres comburants étant relativement faible de manière à pouvoir être fortement suralimenté.

La plupart des moteurs actuels fonctionnent suivant le cycle thermodynamique à quatre temps. Dans un premier temps dit d'admission ou d'aspiration, le piston recule ou descend dans le cylindre qui est rempli d'un mélange air-combustible (moteur à essence classique, c'est-à-dire à allumage commandé selon le cycle d'Otto). Pendant le deuxième temps, en remontant dans le cylindre, le piston comprime ce mélange et le combustible s'évapore sous l'élévation de la température dans le cylindre. Quand le piston approche de son point mort haut, une étincelle d'allumage qui éclate aux pointes d'une bougie, enflamme le mélange gazeux, ce qui provoque la combustion et une brusque élévation de la température et de la pression dans le cylindre.
Pendant le troisième temps, en redescendant ou reculant dans le cylindre, le piston permet aux gaz comburés ou brûlés de se détendre et c'est à ce moment que le travail utilisable est produit. Quand le piston approche de son point mort bas, les gaz se trouvant encore sous une certaine pression s'échappent à travers une soupape d'échappement aménagée dans la culasse du cylindre. Pendant le quatrième temps, le piston remonte à nouveau et cette évacuation des gaz comburés est ainsi complétée.

La distance parcourue par le piston au cours des quatre temps de ce cycle est chaque fois la même, notamment celle qui est parcourue lors de la course de compression du piston (deuxième temps) et celle lors de la course de détente (troisième temps). Des considérations thermodynamiques prouvent que plus le rapport de détente est important, plus le rendement énergétique, c'est-à-dire le rapport travail utilisable divisé par l'apport calorifique du combustible, est élevé. Dans le cas où ces deux rapports, celui de compression et celui de détente, ne seraient plus couplés et forcés à être égaux, ces mêmes considérations prouvent que pour un rapport de détente donné invariable, ce même rendement énergétique augmente avec un taux de compression décroissant.

En outre, afin de réduire le poids et l'encombrement des moteurs à combustion interne, ainsi que les frottements générés dans celui-ci, il est souhaitable d'augmenter la densité de puissance d'un tel moteur. L'augmentation de la densité de puissance est notamment obtenue en augmentant la quantité d'air admis dans le cylindre de même volume en faisant admettre dans le moteur de l'air précomprimé. Dans le cas d'un moteur à essence, cette pré-compression doit être accompagnée d'une réduction du taux de compression du moteur afin d'éviter le phénomène de cliquetis, c'est-à-dire la détonation spontanée partielle du mélange air-combustible, qui, si elle apparaissait, détruirait les parois de la chambre de combustion du cylindre. L'augmentation de la densité de puissance d'un moteur à quatre temps à essence classique doit être accompagnée d'une réduction du taux de compression et, par conséquent, également du taux de détente, compte tenu de l'égalité obligatoire des deux taux, ce qui en fin de compte diminuera le rendement énergétique.

Dans le cas d'un moteur à combustion interne pouvant supporter une suralimentation poussée, le réglage de la charge ou de la puissance du moteur s'effectuera en grande partie par le réglage de la pression de refoulement du compresseur en question et non plus, comme dans le cas du moteur à quatre temps classique à allumage commandé, par un papillon d'étranglement à l'admission. La conséquence est que le réglage de la charge du moteur au moyen de la pression de refoulement du compresseur permet d'éviter des pertes dites « par pompage », que l'on rencontre dans le réglage de charge classique par papillon d'étranglement. En effet, étrangler l'aspiration naturelle génère une pression dans le cylindre au cours de la course d'admission du piston, pression qui est inférieure à la pression ambiante. Par contre, la contre-pression au cours de la course d'échappement du piston, même à charge partielle, sera toujours aux alentours de la pression ambiante, ce qui résultera dans un bilan de travail mécanique négatif au niveau du vilebrequin pour l'ensemble admission et échappement.

La présente invention a pour but principal d'augmenter le rendement énergétique ainsi que la densité de puissance d'un moteur à combustion interne par la réalisation d'un cycle thermodynamique moteur à l'intérieur.d'une machine à pistons permettant le découplage du taux de compression et du taux de détente. L'intérêt est d'optimiser d'un côté la détente des gaz brûlés de façon à optimiser le rendement énergétique et de réduire de l'autre côté le taux de compression afin de permettre la suralimentation poussée du moteur en question pour augmenter la densité de puissance de celui-ci.

Ce but est atteint par l'insertion d'un temps supplémentaire au cycle à quatre temps du moteur et qui sera la deuxième détente des gaz comburés au moyen d'un cylindre supplémentaire. Ce dernier fonctionnera, si on le considère d'une manière isolée, suivant un cycle à deux temps, c'est-à-dire que le piston de ce cylindre, en reculant ou descendant dans celui-ci, va à chaque fois détendre les gaz comburés ou brûlés une deuxième fois (quatrième temps) et, ensuite en avançant dans ce cylindre, il va évacuer ces gaz (cinquième temps). Le cycle à cinq temps du moteur de l'invention sera constitué par l'admission d'air ou d'un mélange air-combustible, sa compression suivie de la combustion, la première détente des gaz comburés, la deuxième détente de ceux-ci et finalement l'échappement des gaz comburés. L'admission, la compression et la première détente vont être réalisées dans un même petit cylindre dit comburant haute pression. Le taux de compression ainsi que le taux de la première détente seront par conséquent les mêmes. La deuxième détente sera réalisée par deux cylindres au cours du transvasement des gaz comburés du petit cylindre comburant, le piston de ce dernier se déplaçant vers son point mort haut, vers le grand cylindre basse pression, le piston du cylindre basse pression se déplaçant vers son point mort bas. Le taux de détente global sera le produit du taux volumétrique de la première détente par le taux volumétrique de la deuxième détente. Ce taux de détente global sera en fait égal au rapport de la cylindrée basse pression, le piston de cylindre basse pression étant en position de point mort bas, divisé par le volume de la chambre de combustion du cylindre comburant haute pression, le piston de ce dernier étant en position de point mort haut.

On a décrit dans le brevet FR-A-1058109 un moteur à combustion interne comprenant au moins un cylindre qui comporte une chambre de travail de volume variable par le déplacement dans le cylindre d'un piston entre une position de point mort haut et une position de point mort bas, sous l'effet de forces de pression engendrées périodiquement dans ladite chambre, à chaque cylindre étant associés des moyens d'admission et d'évacuation d'un fluide gazeux, le piston de chaque cylindre étant relié à un arbre-vilebrequin du moteur, et qui utilise au moins, d'une part, un cylindre fonctionnant en cylindre basse pression suivant un mode du type deux temps, qui comprend l'admission accompagnée de la détente produisant un travail utile au cours de chaque course du piston du cylindre basse pression vers son point mort bas et l'échappement d'un fluide gazeux au cours de chaque course de ce piston vers son point mort haut et, d'autre part, deux cylindres fonctionnant en cylindres comburants suivant un mode de type quatre temps, comprenant l'admission de l'air ou d'un mélange air-combustible au cours de la première course du piston de chacun des cylindres comburants vers son point mort bas, la compression de cet air ou du mélange air-combustible au cours de la première course du piston vers son point mort haut, suivie de la combustion, la détente des gaz comburés au cours de la deuxième course du piston vers son point mort bas produisant un travail utile et le refoulement des gaz comburés au cours de la deuxième course du piston vers son point mort haut, la cylindrée de chacun des cylindres comburants étant inférieure à celle du cylindre basse pression et les cylindres comburants refoulant alternativement leurs gaz comburés vers le cylindre basse pression, en vue d'une deuxième détente des gaz comburés et de leur échappement du moteur.

Toutefois, ce brevet ne décrit aucun dispositif apte à réaliser une suralimentation d'un tel moteur.

L'invention propose, en conséquence un moteur à combustion interne à cinq temps comprenant un turbo-compresseur permettant la pré-compression de l'air ou du mélange air-combustible à l'admission des cylindres comburants de manière à réaliser une suralimentation plus ou moins poussée de celui-ci.

Pour atteindre ce but, le moteur à combustion interne du type décrit précédemment est caractérisé en ce que lorsque le groupe turbo-compresseur réalise, à l'admission des cylindres comburants, la précompression de l'air ou du mélange air-combustible, le cas échéant refroidi au moyen d'un échangeur de chaleur, jusqu'à trois voies ou tubulures différentes d'échappement alimentées d'une manière non simultanée refoulent, au cours de la course du piston du cylindre basse pression vers son point mort haut, en direction de l'entrée de la turbine, les gaz comburés contenus dans le cylindre basse pression, toutes les tubulures d'échappement, à l'exception de la dernière comportant chacune un clapet de déviation des gaz comburés commandé individuellement en fonction de la charge du moteur et qui, en position ouverte, guide les gaz comburés en provenance du cylindre basse pression directement vers l'échappement tandis qu'en position fermée, le clapet de déviation guide ces mêmes gaz comburés vers le collecteur des gaz comburés à l'entrée de la turbine, la dernière tubulure d'échappement étant la première en communication avec la chambre de travail du cylindre basse pression.

Selon une autre caractéristique de l'invention, le moteur à combustion interne comprend cinq cylindres rangés en ligne, comprenant trois cylindres comburants haute pression et deux cylindres basse pression, deux cylindres comburants se trouvant aux extrémités de l'arbre vilebrequin auquel sont reliés les pistons des deux cylindres, le troisième cylindre comburant haute pression se trouvant au milieu et pouvant communiquer avec les deux cylindres basse pression adjacents par respectivement au moins une soupape et une tubulure de transvasement de façon à transférer simultanément, lors de la deuxième détente, les gaz comburés contenus dans le cylindre comburant central dans les deux cylindres basse pression qui lui sont associés, ces mêmes cylindres basse pression recevant au cours du tour de vilebrequin suivant lors du déplacement du piston vers son point mort bas l'entièreté des gaz comburés contenus dans le cylindre comburant se trouvant à l'extrémité du vilebrequin et à côté du cylindre basse pression en question.

Selon encore un autre mode de réalisation, le moteur à combustion interne comprend un nombre impair, supérieur à cinq, de cylindres rangés en ligne de façon qu'aux extrémités du vilebrequin de celui-ci se trouvent deux cylindres comburants haute pression et de façon que les autres cylindres comburants haute pression se trouvent entre deux cylindres basse pression et puissent communiquer avec les deux cylindres basse pression adjacents par respectivement au moins une soupape et une tubulure de transvasement de façon à transférer simultanément, lors de la deuxième détente, les gaz comburés contenus dans le cylindre comburant vers les deux cylindres basse pression qui lui sont associés.

Le moteur comprend en outre des moyens de commande de la pression de suralimentation d'air ou du mélange air-combustible à l'admission des cylindres comburants pour réaliser un réglage de la charge du moteur, pour un régime donné, pour une grande partie de la plage du couple de fonctionnement de celui-ci, et un compresseur entraîné mécaniquement ou un groupe turbo-compresseur, dont la turbine est entraînée par la détente supplémentaire des gaz d'échappement du moteur, pour assurer la précompression de l'air ou du mélange air-combustible, le cas échéant refroidi au moyen d'un échangeur de chaleur, l'entrée de la turbine étant raccordée à un collecteur de gaz comburés pourvu d'une soupape du type waste-gate permettant, en position ouverte ou partiellement ouverte, de dévier tout ou partie des gaz comburés directement vers l'échappement du moteur.

Les tubulures d'admission des cylindres comburants comportent des moyens d'introduction du combustible dans le fluide précomprimé, tels que des moyens d'injection commandée ou des carburateurs et les chambres de travail des cylindres comburants sont équipées chacune d'un moyen permettant d'enflammer le mélange air-combustible.

Les chambres de travail des cylindres comburants comprennent, selon une variante de réalisation, des moyens d'injection directe du combustible dans l'air comprimé vers la fin de la compression dans les cylindres de façon que le combustible s'enflamme spontanément.

En variante, les chambres de travail des cylindres comburants comprennent des moyens d'injection directe du combustible dans l'air comprimé au cours de la course de la compression pour des rapports masse d'air divisée par masse de combustible variables et qui sont commandés en fonction de la charge du moteur, les chambres de travail des cylindres comburants haute pression étant équipées d'un moyen permettant d'enflammer le mélange air-combustible.

Le cylindre basse pression comporte, selon une variante, des lumières d'échappement, aménagées dans celui-ci, évacuant entièrement ou partiellement les gaz comburés contenus dans le cylindre et qui sont découvertes par le piston du cylindre quand celui-ci se trouve à une position proche de son point mort bas.

Avantageusement, les tubulures de transvasement précitées comportent chacune une soupape de transvasement auxiliaire supplémentaire associée à la culasse du cylindre basse pression et s'ouvrant approximativement de façon synchrone avec la soupape de transvasement principale de la même tubulure de transvasement associée à la culasse du cylindre comburant.

L'invention sera mieux comprise, et d'autres buts, caractéristiques, détails et avantages de celle-ci apparaîtront plus clairement au cours de la description explicative qui va suivre faite en référence aux dessins schématiques annexés donnés uniquement à titre d'exemple illustrant plusieurs modes de réalisation de l'invention, et dans lesquels :
- la figure 1 est une vue en coupe verticale du bloc moteur d'un premier mode de réalisation d'un moteur à combustion interne à trois cylindres conforme à l'invention ;
- les figures 2a à 2d sont des vues en coupe identiques à celles de la figure 1 et représentant quatre phases de fonctionnement du moteur se déroulant pendant deux tours de rotation du vilebrequin de celui-ci ;
- les figures 3a à 3d représentent en coupe verticale du bloc moteur d'un second mode de réalisation du moteur à cinq cylindres et relatives au fonctionnement de celui-ci pendant deux tours de rotation du vilebrequin du moteur;
- la figure 4 est une vue en coupe verticale de la culasse d'un cylindre basse pression où deux soupapes supplémentaires de transvasement sont prévues pour obturer les canaux de transvasement du côté de ce cylindre ;
- la figure 5 représente le moteur à trois cylindres de la figure 1 suralimenté par un groupe turbocompresseur, dont la turbine est alimentée par les gaz d'échappement acheminés par trois voies différentes ;
- les figures 6a à 6c représentent le moteur de la figure 5 fonctionnant à très faible charge sans être suralimenté et dont le piston du cylindre basse pression occupe trois positions au cours de la course d'échappement ;
- les figures 7a à 7c représentent le moteur de la figure 5 fonctionnant à faible charge en étant faiblement suralimenté et dont le piston du cylindre basse pression occupe trois positions au cours de la course d'échappement ;
- les figures 8a à 8c représentent le moteur de la figure 5 fonctionnant à charge partielle en étant que partiellement suralimenté et dont le piston du cylindre basse pression occupe trois positions au cours de la course d'échappement ; et
- les figures 9a à 9c représentent le moteur de la figure 5 fonctionnant à pleine charge en étant pleinement suralimenté et montrant les trois positions du piston du cylindre basse pression du moteur au cours de la course d'échappement.

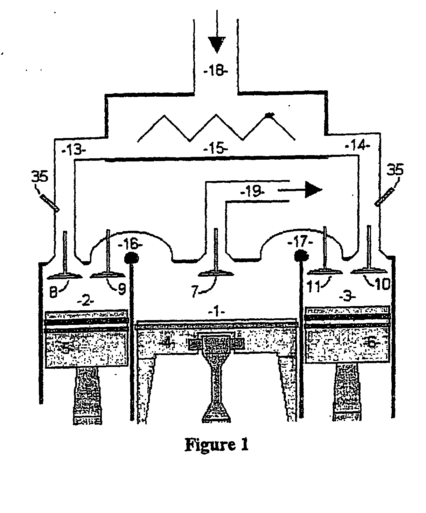

Les figures 1 à 2 représentent un premier mode de réalisation d'un moteur à combustion interne à cinq temps par allumage commandé de l'invention et qui comprend trois cylindres rangés en ligne. Plus précisément, ce moteur comprend deux cylindres comburants haute pression 2, 3 situés aux extrémités du vilebrequin (non représenté) du moteur et fonctionnant suivant le cycle d'un moteur quatre temps et un cylindre central 1 basse pression qui fonctionne selon un mode deux temps. Le volume du cylindre basse pression 1 est supérieur à celui des cylindres comburants 2, 3. Un échangeur de chaleur 15 est relié par une tubulure 18 à la sortie de refoulement d'un appareil compresseur (non représenté), qui décharge de l'air précomprimé, et la sortie de l'échangeur est reliée aux deux cylindres comburants haute pression 2, 3 par des tubulures 13, 14 d'admission du mélange air-combustible précomprimé. Les tubulures 13, 14 sont pourvues de soupapes d'admission 8, 10 associées aux cylindres comburants 2, 3. L'introduction du combustible s'effectue au niveau des tubulures d'admission 13, 14 au moyen d'un dispositif d'injection commandé 35. Les chambres de travail C2, C3 des cylindres comburants 2, 3 sont reliées à la chambre de travail C1 du cylindre basse pression respectivement par des tubulures de transvasement 16, 17 des gaz comburés ou brûlés. Les tubulures de transvasement 16, 17 sont pourvues respectivement de soupapes de transvasement 9, 11 associées aux cylindres comburants 2, 3. Les soupapes de transvasement 9 et 11, les soupapes d'admission d'air ou du mélange air-combustible 8, 10 ainsi que les bougies d'allumage (non représentées) se trouvent dans les culasses 2a, 3a des cylindres comburants haute pression 2, 3.

La chambre de travail C1 du cylindre basse pression 1 est fermée par une culasse 1a qui comporte une soupape 7 de fermeture d'une tubulure d'échappement 19 raccordée à la culasse et communiquant avec la chambre de travail C1.

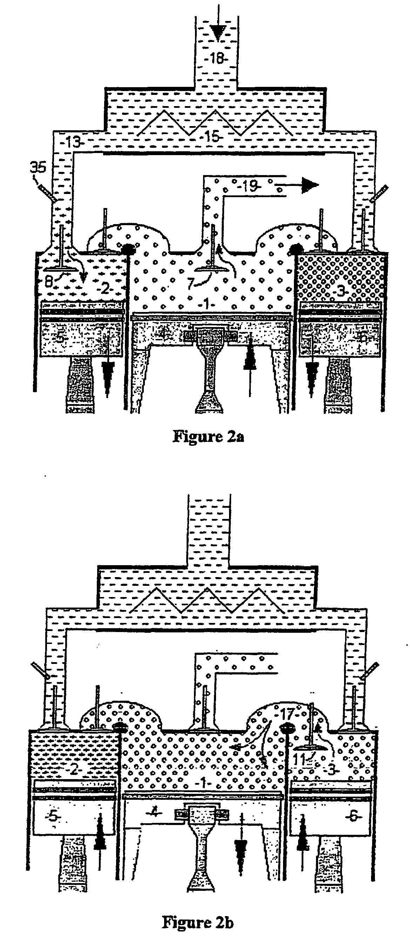

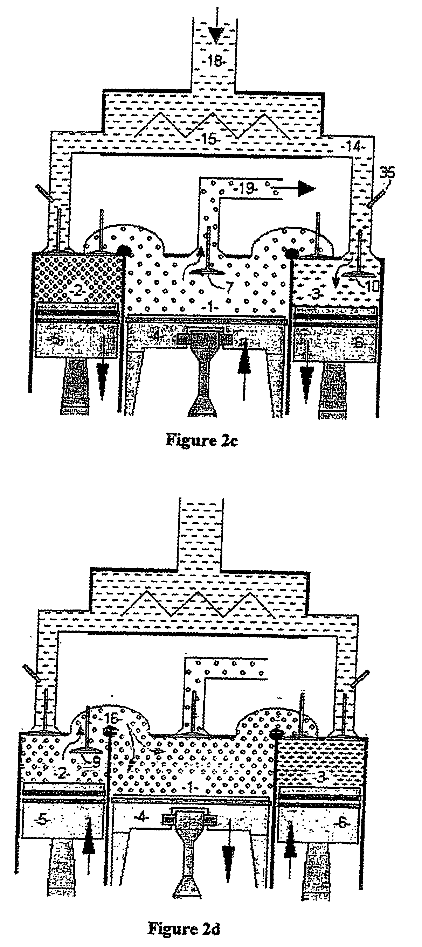

Dans cette configuration des trois cylindres 1 à 3, le cylindre basse pression 1 forme avec le cylindre comburant haute pression gauche 2, une première paire de cylindres détendants, tandis qu'il forme avec le cylindre comburant haute pression droit 3, une deuxième paire de cylindres détendants, comme cela ressortira de la description suivante du fonctionnement du moteur, en se référant aux figures 2a à 2d.

Ces figures montrent en détail les quatre phases de fonctionnement du moteur que l'on rencontre lors de deux tours du vilebrequin du moteur de la figure 1. Sur les figures 2a à 2d, les zones pourvues de simples traits sont des zones remplies d'air, les zones pourvues de croix sont des zones remplies de mélange air-combustible et les zones pourvues de petits ronds représentent des zones qui sont remplies de gaz comburés.

Comme représenté en figure 2a, les pistons 5 et 6 des cylindres comburants haute pression 2, 3 sont en train de descendre dans les cylindres 2, 3 pendant que le piston basse pression 4 monte dans le cylindre 1. Le cylindre comburant gauche 2 est en train d'admettre un mélange air-combustible pré-comprimé à travers la soupape d'admission 8, qui est ouverte à cet effet. Le cylindre basse pression 1 est en train de refouler les gaz comburés à travers la soupape d'échappement 7, qui est ouverte, vers la tubulure d'échappement 19. Le cylindre comburant droit 3 est en train de détendre une première fois les gaz comburés.

En figure 2b, les pistons 5, 6 des cylindres comburants haute pression 2, 3 sont en train de remonter dans les cylindres 2, 3 pendant que le piston basse pression 4 descend dans le cylindre 1. Le cylindre comburant gauche 2 est en train de comprimer le mélange air-combustible qu'il vient d'admettre et, vers la fin de cette compression, ce mélange air-combustible sera enflammé par l'étincelle d'allumage d'une bougie. Toutes les soupapes 8, 9 associées au cylindre 2 sont fermées. Le cylindre basse pression 1 est en train d'admettre les gaz combùrés en provenance du cylindre comburant 3, qui refoule ces mêmes gaz, à travers la tubulure de transvasement 17, la soupape de transvasement associée 11 étant ouverte. Du fait que le volume du cylindre basse pression 1 est plus grand que le volume du cylindre comburant 3, le transvasement des gaz comburés du cylindre comburant 3 vers le cylindre basse pression 1 est accompagné d'une détente de ces gaz comburés, produisant un travail utilisable sur le vilebrequin.

Selon la figure 2c, les pistons 5, 6 des cylindres comburants haute pression 2, 3 sont en train de descendre à nouveau dans les cylindres 2, 3 pendant que le piston basse pression 4 remonte à nouveau dans le cylindre 1. Le cylindre comburant 3 est en train d'admettre un mélange air-combustible pré-comprimé à travers la soupape d'admission 10, qui est ouverte à cet effet. Le cylindre basse pression 1 est en train de refouler les gaz comburés à travers la soupape d'échappement 7, qui est ouverte, vers la tubulure d'échappement 19. Le cylindre comburant gauche 2 est en train de détendre une première fois les gaz comburés.

En figure 2d, les pistons 5, 6 des cylindres comburants haute pression 2, 3 sont en train de remonter dans ces cylindres pendant que le piston basse pression 4 descend dans le cylindre 1. Le cylindre comburant droit 3 est en train de comprimer le mélange air-combustible qu'il vient d'admettre et vers la fin de cette compression, ce mélange air-combustible est enflammé par l'étincelle d'allumage de la bougie, toutes les soupapes 10, 11 associées à ce cylindre étant fermées. Le cylindre basse pression 1 est en train d'admettre les gaz comburés en provenance du cylindre comburant gauche 2, qui refoule ces mêmes gaz à travers la tubulure de transvasement 16, la soupape de transvasement associée 9 étant ouverte. Du fait que le volume du cylindre basse pression 1 est plus grand que le volume du cylindre comburant 2, le transvasement des gaz comburés du cylindre comburant 2 vers le cylindre basse pression 1 est accompagné d'une détente de ces gaz comburés, produisant un travail utilisable sur le vibrequin.

Selon une variante de réalisation, le moteur à combustion interne à cinq temps à trois cylindres diffère de celui ci-dessus décrit par la façon d'introduire le combustible qui est directement injecté vers la fin de la compression aux chambres de combustion des cylindres comburants haute pression 2, 3 où il s'enflammera alors spontanément. La puissance de l'échangeur de chaleur 15 ainsi que les rapports des cylindrées et de compression devront être bien entendu réajustés.

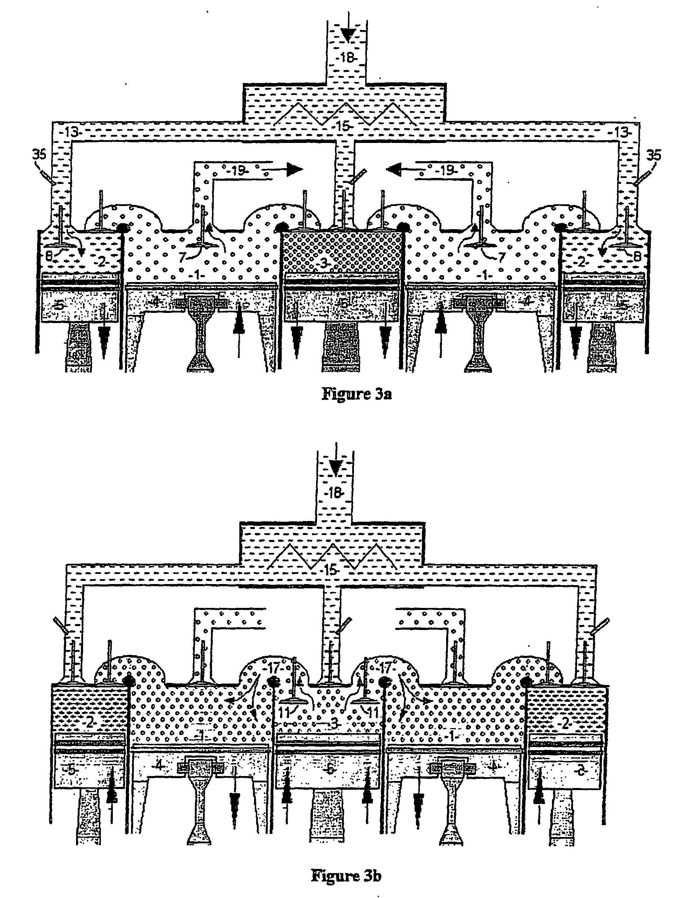

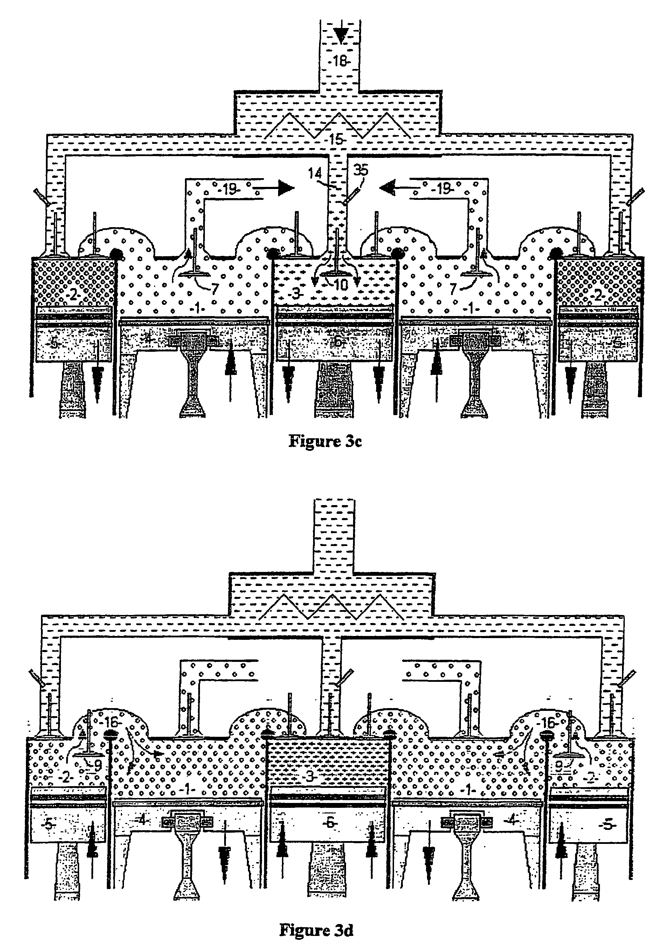

Du mode de réalisation du moteur à combustion interne à trois cylindres, on peut déduire, en se référant aux figures 3a à 3d, celui du moteur à cinq cylindres en juxtaposant deux moteurs à trois cylindres en les rangeant en ligne de façon que les deux cylindres comburants haute pression centraux travaillent parfaitement en phase. On peut alors "fusionner" ces deux derniers en un unique cylindre comburant haute pression central 3, qui aura alors une cylindrée de préférence deux fois plus grande que la cylindrée des deux cylindres comburants haute pression 2 se trouvant aux extrémités du vilebrequin. La chambre de travail C3 du cylindre comburant haute pression central 3 communique ainsi avec les deux chambres de travail C1 des cylindres basse pression à deux temps avoisinants 1 au moyen des soupapes 11 se trouvant dans la culasse 3a du cylindre 3 et des tubulures de transvasement 17. La deuxième détente des gaz comburés se trouvant dans le cylindre comburant central 3 s'effectue en les transférant simultanément vers les deux cylindres basse pression adjacents 1 au travers des soupapes ouvertes 11 et des tubulures 17 comme représenté en figure 3b. Les figures 3a à 3d reprennent en détail les quatre phases que l'on rencontre lors de deux tours du vilebrequin du moteur à combustion interne à cinq temps à cinq cylindres, où les zones hachurées en traits horizontaux sont remplies d'air uniquement et les zones hachurées en petits ronds sont remplies de gaz comburés. Il est inutile de décrire ces quatre phases qui ressortent clairement de celles du moteur à cinq temps à trois cylindres décrites en détail précédemment en référence aux figures 2a à 2d.

Cette façon de procéder n'est bien entendu pas limitée à cinq cylindres et on peut ainsi créer des moteurs à combustion interne à cinq temps de 5, 7, 9..., cylindres. Toutes ces réalisations se prêtent aux deux types d'allumage, spontané et commandé.

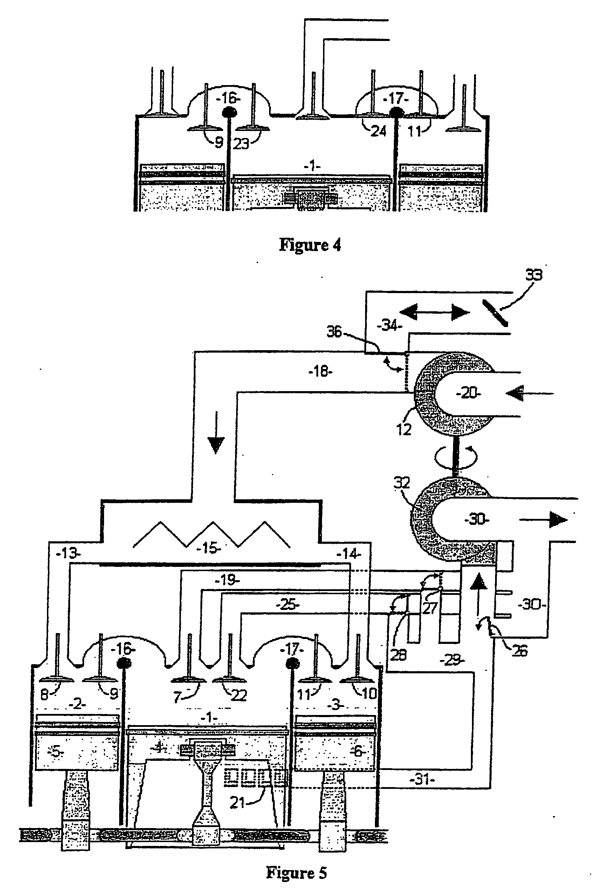

Un autre mode de réalisation du moteur à combustion interne à cinq temps et à trois cylindres est illustré à la figure 4, où les tubulures de transvasement 16, 17 peuvent être obturées non seulement du côté des cylindres comburants 2, 3 par les soupapes 9 et 11, mais également du côté du cylindre basse pression 1 au moyen de soupapes de transvasement auxiliaire 23 et 24, respectivement. Les soupapes de transvasement 9, 23 montées respectivement dans les culasses 2a et 1a et aux extrémités de la tubulure de transvasement 16 reliant la chambre de travail C2 du cylindre comburant gauche 2 à la chambre de travail C1 du cylindre basse pression 1, s'ouvrent et se ferment approximativement de façon synchrone. De même, les soupapes de transvasement 11, 24 montées respectivement dans les culasses 3a et 1a et aux extrémités de la tubulure de transvasement 17 reliant la chambre de travail C3 du cylindre comburant droit 3 à la chambre de travail C1 du cylindre basse pression 1, s'ouvrent et se ferment approximativement de façon synchrone. L'intérêt d'utiliser les soupapes de transvasement auxiliaires 23, 24 est d'une part de réduire l'espace mort du cylindre basse pression 1 en séparant le volume de la tubulure de transvasement non active 16, 17 lors de la deuxième détente des gaz comburés du volume de la chambre de travail C1 du cylindre basse pression 1. D'autre part, cette soupape de transvasement auxiliaire 23, 24 empêche que la soupape de transvasement principale fermée 9, 11 ne subisse en son aval la pression relativement importante régnant dans le cylindre basse pression 1 au début de la deuxième détente, pression qui pourrait avoir tendance à ouvrir la soupape de transvasement principale 9, 11, associée au cylindre comburant 2, 3.

Comme mentionné précédemment, le moteur à combustion interne à cinq temps est destiné à une suralimentation plus ou moins poussée. Cette suralimentation pourra évidemment être réalisée de différentes manières. La suralimentation par turbo-compresseur consiste essentiellement en une turbine, qui est entraînée par la détente des gaz comburés en provenance du moteur à combustion interne et qui, à son tour, entraîne un compresseur qui comprime l'air admis dans les cylindres du moteur.

La figure 5 illustre un mode de réalisation de la suralimentation par turbo-compresseur un peu plus sophistiqué. En effet, suivant ce mode de réalisation, les gaz comburés et détendus une deuxième fois dans le cylindre basse pression 1 sont acheminés par trois voies ou tubulures différentes 19, 25, 31 vers le collecteur des gaz d'échappement 29 situé à l'entrée d'une turbine 32. Les trois tubulures d'échappement 19, 25, 31 peuvent être obturées du côté du cylindre basse pression respectivement par les soupapes d'échappement 7 et 22 situées dans la culasse 1a à laquelle sont raccordées les deux tubulures 19, 25 du cylindre basse pression 1 et par des lumières d'échappement 21 aménagées dans la chemise du cylindre basse pression 1. Les lumières d'échappement 21 ne seront découvertes par le piston basse pression 4 que quand celui-ci se trouvera proche de son point mort bas. La tubulure 31 débouche directement dans le collecteur d'échappement d'entrée 29. Les deux soupapes d'échappements 7, 22 sont commandées de façon à ne pas s'ouvrir et se fermer de façon synchrone. Les écoulements de gaz comburés dans les tubulures d'échappement 19, 25 reliées à la culasse du cylindre basse pression 1 sont soit dirigés vers le collecteur d'échappement 29 raccordé à l'entrée de la turbine 32, soit vers le collecteur d'échappement 30 raccordé à la sortie de la turbine où le niveau de pression se rapproche de celui de la pression ambiante. Pour cela, des clapets de déviation 27, 28 des gaz d'échappement sont disposés dans les tubulures d'échappement 19, 25 à l'opposé de leurs extrémités reliées à la culasse 1a du cylindre basse pression 1 et peuvent occuper une position fermée transversale aux tubulures 19, 25 pour les obturer et diriger les gaz comburés vers l'entrée de la turbine 32 au travers de perçages 19a, 25a ouverts par les clapets 27, 28 et réalisés au travers des parois des tubulures 19, 25 en communication avec le collecteur 29 qui communique avec l'entrée de la turbine 32, ou une position d'ouverture des tubulures 19, 25 et de fermeture des perçages 19a, 25a, pour diriger les gaz comburés directement dans le collecteur d'échappement de sortie 30 dans lequel débouchent les tubulures 19, 25. Une soupape du type waste-gate 26 est disposée entre le collecteur d'échappement d'entrée 29 et le collecteur d'échappement de sortie 30 de la turbine 32 pour soutenir le réglage de la pression à l'entrée de la turbine en fonction de la charge.

Le but de ce système d'échappement vers l'entrée de la turbine est de réduire dans la mesure du possible la pression de refoulement à l'intérieur du cylindre basse pression 1 lors de la course d'avancement du piston 4 de celui-ci.

La figure 5 représente également un clapet de déviation 36 du côté de l'admission, normalement fermé, qui, en position ouverte, permet l'écoulement libre de l'air de la tubulure d'admission d'air précomprimé 18 vers la tubulure d'admission auxiliaire 34, qui débouche vers l'air ambiant. L'intérêt de la tubulure d'admission auxiliaire 34 et du clapet de déviation associé 36 est d'un côté d'admettre de l'air en contournant le compresseur 12 à très faible charge du moteur et de l'autre côté d'agir comme soupape et tubulure de sûreté, dans le cas où le réglage de la pression de refoulement du compresseur 12 ne pourra plus s'effectuer, suite, par exemple, à des défaillances techniques, au moyen de la soupape 26, positionnée à l'entrée de la turbine 32 dans le but de régler la puissance de celle-ci. Cette tubulure d'admission auxiliaire 34 est, en plus, équipée d'un papillon d'étranglement 33 pour réduire davantage la pression à l'admission dans le cas de très faibles charges et du fonctionnement au ralenti du moteur.

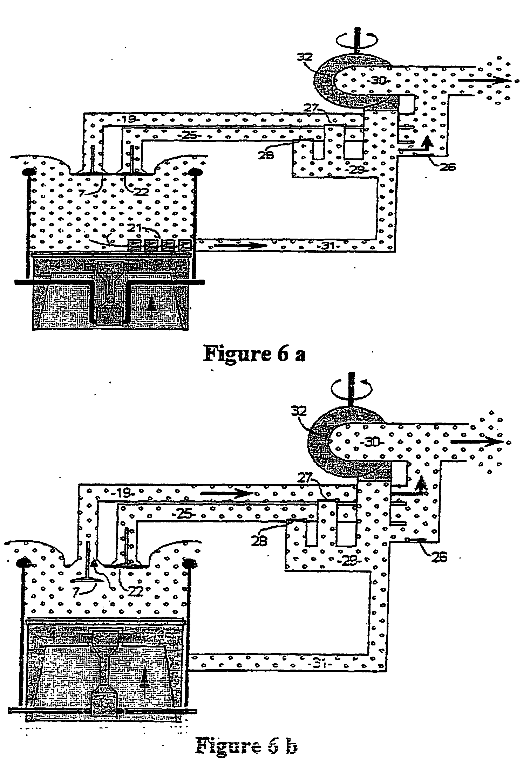

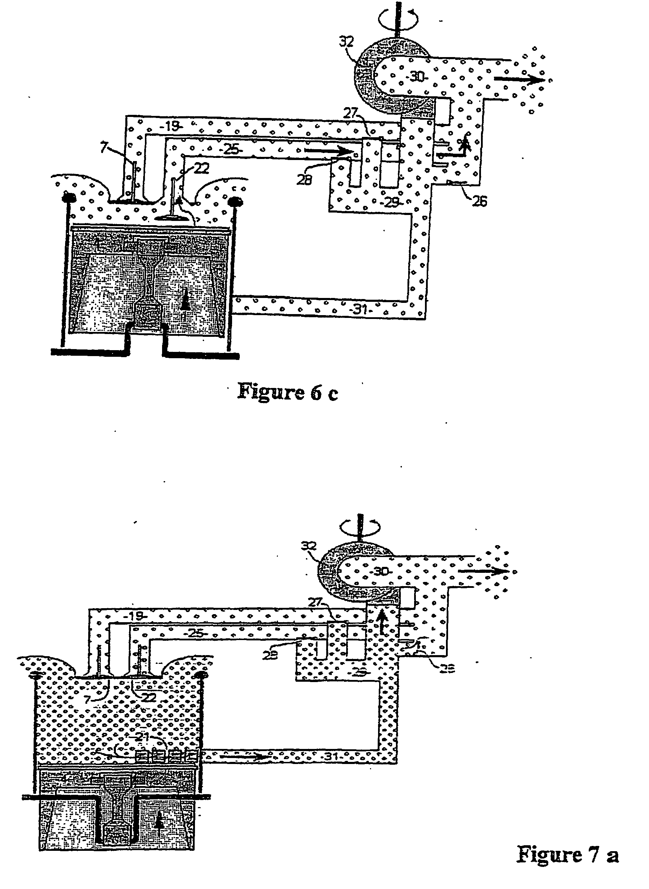

Le fonctionnement de ce mode de réalisation du moteur suralimenté va être expliqué en détail en se référant maintenant aux figures 6 à 9.

Les figures 6a à 6c représentent le mode d'évacuation des gaz comburés dans le cas où la charge sera tellement faible qu'une suralimentation ne sera pas nécessaire. La soupape 26 est complètement ouverte et est commandée de façon à maintenir une pression minimale à l'entrée de la turbine 32 pour en assurer un régime de reprise convenable. Les deux clapets de déviation 27, 28 sont en position ouverte de façon à diriger les gaz d'échappement en provenance des tubulures d'échappement 19, 25 directement, sans passer à travers la turbine 32, vers le collecteur d'échappement 30 à la sortie de la turbine.

En figure 6a, le piston basse pression 4, après avoir achevé la deuxième détente des gaz comburés, arrive à sa position de point mort bas et les lumières d'échappement 21, qui sont aménagées dans le cylindre basse pression 1, sont découvertes et, grâce à une pression résiduelle dans le cylindre basse pression 1 plus élevée que la pression régnant dans le collecteur d'échappement 29 à l'entrée de la turbine 32, une partie des gaz comburés contenus dans le cylindre basse pression 1 va s'écouler à travers les lumières d'échappement 21 et le long de la tubulure d'échappement 31 vers le collecteur d'échappement 29 où la pression sera à peine au-dessus de la pression ambiante suite à l'ouverture de la soupape 26. Par conséquent, la pression à l'intérieur du cylindre basse pression 1 va chuter pour atteindre à peu près le niveau de la pression ambiante. A cette position du piston basse pression 4, les deux soupapes d'échappement 7 et 22 sont encore fermées.

En figure 6b, le piston basse pression 4 se trouve dans une position telle que les lumières d'échappement 21 seront à nouveau obturées par celui-ci, une première soupape d'échappement 7 s'ouvre, et le piston 4 du cylindre basse pression 1 en avançant ou montant davantage dans le cylindre va chasser une autre partie des gaz comburés à travers la soupape d'échappement ouverte 7 et le long de la tubulure d'échappement 19 associée directement, sans passer par la turbine 32, vers le collecteur d'échappement 30 situé à la sortie de la turbine, le clapet de déviation 27 étant en position ouverte.

En figure 6c, le piston basse pression 4 est avancé davantage dans le cylindre et la première soupape d'échappement 7 s'est refermée. La deuxième soupape d'échappement 22 est maintenant ouverte et le piston 4 du cylindre basse pression 1 en avançant davantage va chasser une dernière partie des gaz comburés à travers la soupape d'échappement ouverte 22 le long de la tubulure d'échappement associée 25 directement, sans passer par la turbine 32, vers le collecteur d'échappement 30 situé à la sortie de la turbine 32, le clapet de déviation 28 se trouvant en position ouverte.

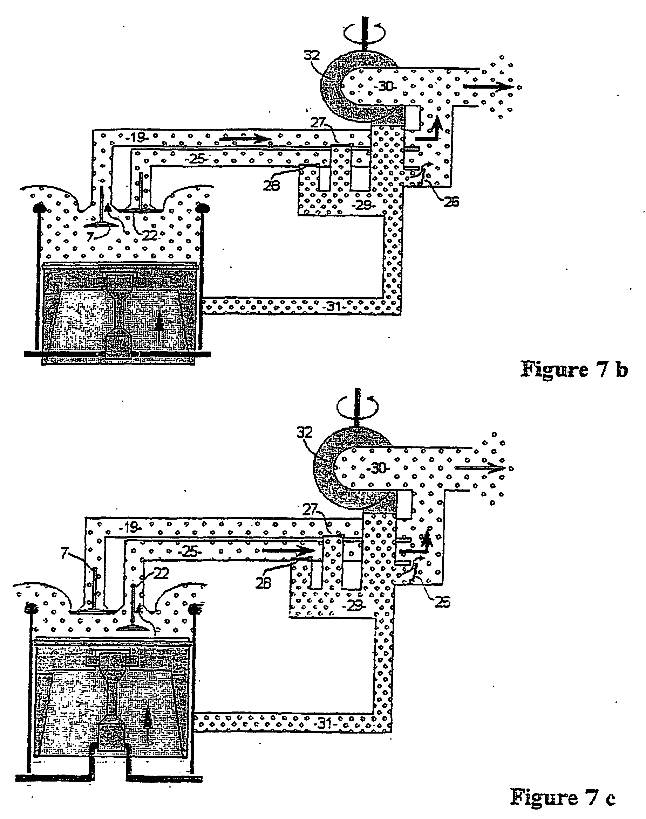

Les figures 7a à 7c représentent le mode d'évacuation des gaz comburés dans le cas où la charge sera toujours faible, mais où une légère suralimentation du moteur sera toutefois déjà nécessaire. La soupape 26 n'est plus complètement ouverte et est commandée de façon à maintenir une pression à l'entrée de la turbine 32 en fonction de la faible charge demandée. Les deux clapets de déviation 27, 28 sont en position ouverte pour diriger les gaz d'échappement en provenance des tubulures d'échappement 19, 25 directement, sans passer à travers la turbine 32, vers le collecteur d'échappement 30 à la sortie de la turbine. Seule la quantité de gaz évacuée par les lumières d'échappement 21 situées au bas du cylindre basse pression 1 est dirigée vers la turbine 32 pour y être détendue. Les gaz comburés évacués par les soupapes d'échappement 7, 22 situées dans la culasse 1a du cylindre basse pression 1 ne traversent pas la turbine 32 et la pression dans le cylindre basse pression chutera à un niveau proche de celui de la pression ambiante, dès qu'une des deux soupapes d'échappement 7, 22 s'ouvrira.

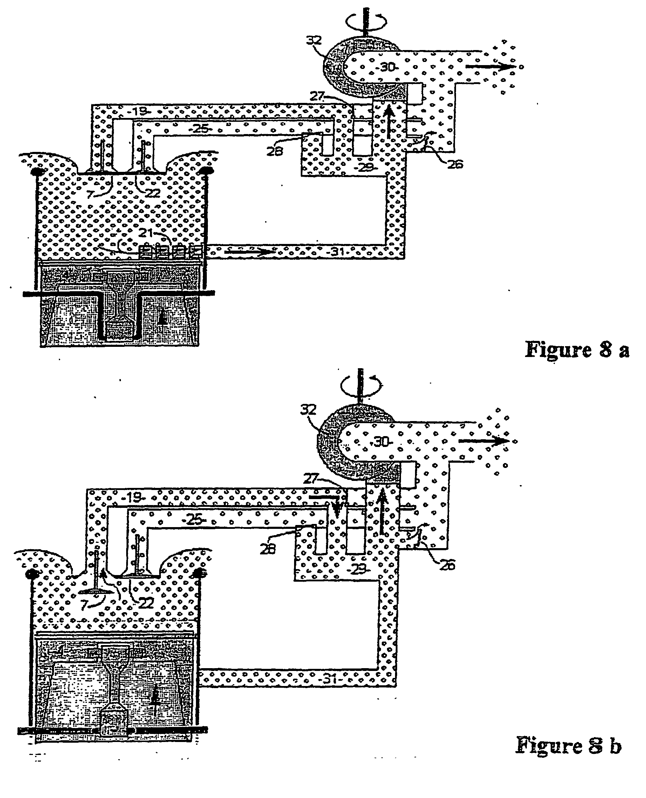

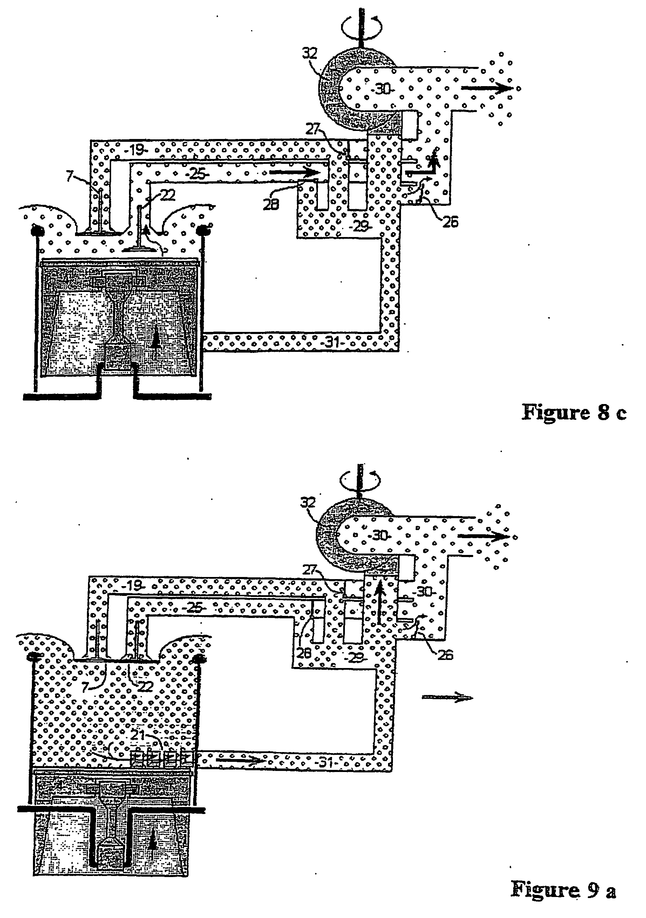

Les figures 8a à 8c représentent le mode d'évacuation des gaz comburés dans le cas où la charge sera moyenne et où une suralimentation plus poussée du moteur devient nécessaire. La soupape 26 est commandée de façon à maintenir une pression à l'entrée de la turbine 32 en fonction de la charge demandée. Le clapet de déviation 27 associé à la tubulure d'échappement 19 associée à la soupape d'échappement 7, qui va s'ouvrir dès que le piston basse pression 4 vient d'obturer les lumières d'échappement 21, est en position fermée de façon à diriger les gaz d'échappement s'écoulant le long de la tubulure d'échappement correspondante 19 vers l'entrée de la turbine 32 pour y être détendus. L'autre clapet de déviation 28 associé à la tubulure d'échappement 25 associée à la soupape d'échappement 22, qui va s'ouvrir plus tard quand l'autre soupape d'échappement 7 se refermera, est en position ouverte de façon à diriger les gaz d'échappement en provenance de la tubulure d'échappement correspondante 25 directement, sans passer à travers la turbine 32, vers le collecteur d'échappement 30 à la sortie de la turbine 32. Cette fois, la quantité de gaz évacuée par les lumières d'échappement 21 situées en bas du cylindre basse pression 1 et la quantité de gaz évacuée par la soupape d'échappement 7 s'ouvrant la première, seront dirigées vers la turbine 32 pour y être détendues. Les gaz comburés évacués par l'autre soupape d'échappement 22 s'ouvrant la dernière ne traverseront pas la turbine 32 et la pression dans le cylindre basse pression 1 chutera à un niveau proche de celui de la pression ambiante, dès que la soupape d'échappement 22 s'ouvrira.

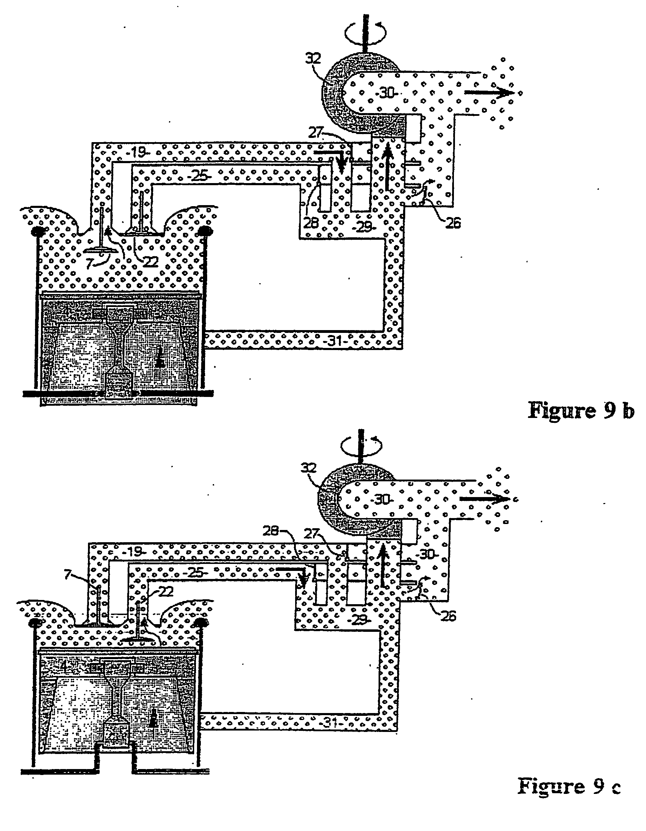

Les figures 9a à 9c représentent le mode d'évacuation des gaz comburés dans le cas où la charge sera élevée et où une suralimentation maximale du moteur devient nécessaire. La soupape 26 sera commandée de façon à maintenir une pression à l'entrée de la turbine 32 en fonction de la charge demandée. Les deux clapets de déviation 27, 28 associés aux tubulures d'échappement 19, 25 qui sont associées aux soupapes d'échappement 7, 22, sont en position fermée de façon à diriger les gaz d'échappement s'écoulant le long des tubulures d'échappement correspondantes 19, 25 vers l'entrée de la turbine 32 pour y être détendus. Cette fois, tous les gaz évacués du cylindre basse pression 1, à l'exception de ceux qui passeront à travers la soupape 26 éventuellement ouverte, sont dirigés vers la turbine 32 pour être détendus. C'est uniquement dans cette situation que la pression dans le cylindre basse pression 1 sera proche de la contre-pression créée par la turbine tout au long de la course d'échappement.

Ce mode de réalisation de l'évacuation des gaz comburés vers la turbine du groupe turbo-compresseur pourra évidemment être rendu moins complexe en supprimant les lumières d'échappement 21 et en avançant l'ouverture de la première soupape d'échappement 7. Le clapet de déviation 27 qui est associé à la tubulure d'échappement correspondante 19 sera tout le temps fermé et pourra par conséquent être supprimé. De même, il est possible de supprimer la deuxième soupape d'échappement 22 ainsi que la tubulure d'échappement 25 et le clapet de déviation correspondant 28 et, dans ce cas, il faudra étendre l'ouverture de la première soupape d'échappement 7.

Le moteur à combustion interne à cinq temps faisant l'objet de la présente invention peut être utilisé dans tout domaine technique où l'on utilise actuellement de tels moteurs, notamment dans le transport routier.

Le principal avantage de l'invention par rapport aux moteurs existants est un net accroissement du rendement énergétique. Pour des puissances d'échangeurs de chaleur et des pressions maximales qui semblent tout à fait admissibles, les calculs montrent un accroissement de ce rendement d'environ 20%, à pleine charge à 25%, à charge partielle, dans le cas du moteur à allumage commandé (essence) et de 14 à 25% dans le cas du moteur à allumage spontané (diesel).

L'autre avantage de l'invention par rapport aux moteurs existants est une densité de puissance améliorée, grâce à la possibilité d'une suralimentation poussée pouvant atteindre une pression absolue à l'admission des cylindres comburants de 3 à 5 bars.

## Revendications

1. Moteur à combustion interne du type comprenant au moins un cylindre (2, 3) qui comprend une chambre de travail (C2, C3) de volume variable par le déplacement dans le cylindre (2, 3) d'un piston (5, 6) entre une position de point mort haut et une position de point mort bas, sous l'effet de forces de pression engendrées périodiquement dans ladite chambre, à chaque cylindre (2, 3) étant associés des moyens d'admission et d'évacuation d'un fluide gazeux, le piston de chaque cylindre étant relié à un arbre vilebrequin du moteur, ledit moteur comprenant :
• d'une part, un cylindre (1) fonctionnant en cylindre basse pression suivant un mode du type deux temps, qui comprennent l'admission accompagnée de la détente produisant un travail utile au cours de chaque course du piston du cylindre basse pression (1) vers son point mort bas et l'échappement d'un fluide gazeux au cours de chaque course du piston vers son point mort haut et,
• d'autre part, deux cylindres (2, 3) fonctionnant en cylindres comburants suivant un mode du type quatre temps, qui comprennent l'admission de l'air ou d'un mélange air-combustible au cours de la première course du piston de chacun des cylindres comburants (2, 3) vers son point mort bas, la compression de cet air ou du mélange air-combustible dans le cylindre comburant au cours de la première course du piston vers son point mort haut, survie de la combustion, la détente des gaz comburés au cours de la deuxième course du piston vers son point mort bas produisant un travail utile et le refoulement des gaz comburés au cours de la deuxième course du piston vers son point mort haut, le cylindre basse pression (1) pouvant communiquer avec les deux cylindres comburants (2, 3) par respectivement au moins une soupape (9, 11) et une tubulure de transvasement (16, 17), la cylindrée de chacun des cylindres comburants (2, 3) étant inférieure à celle du cylindre basse pression (1), les cylindres comburants (2, 3) refoulant alternativement leurs gaz comburés vers le cylindre basse pression (1) en vue d'une deuxième détente des gaz comburés et de leur échappement du moteur,
• et un moyen de suralimentation des cylindres comburants (2, 3) constitué d'un turbo-compresseur, le rapport de compression volumétrique des cylindres comburants (2, 3) étant relativement faible de manière à pouvoir être fortement suralimenté, **caractérisé en ce que** lorsque le groupe turbo-compresseur réalise, à l'admission des cylindres comburants (2, 3), la précompression de l'air ou du mélange air-combustible, le cas échéant refroidi au moyen d'un échangeur de chaleur (15), jusqu'à trois tubulures différentes (19, 25, 31) alimentées d'une manière non simultanée refoulent, au cours de la course du piston (4) du cylindre basse pression (1) vers son point mort haut, en direction de l'entrée de la turbine (32), les gaz comburés contenus dans le cylindre basse pression (1), toutes les tubulures, à l'exception de la dernière, (19, 25) comportant chacune un clapet de déviation (27, 28) des gaz comburés commandé individuellement en fonction de la charge du moteur et qui, en position ouverte, guide les gaz comburés en provenance du cylindre basse pression (1) directement vers l'échappement tandis qu'en position fermée, le clapet de déviation (27, 28) guide ces mêmes gaz comburés vers le collecteur des gaz comburés (29) à l'entrée de la turbine (32), la dernière tubulure d'échappement (31) étant la première en communication avec la chambre de travail (C1) du cylindre basse pression (1).

2. Moteur à combustion interne selon la revendication 1, **caractérisé en ce qu'**il comprend un moyen de commande de la pression de suralimentation d'air ou du mélange air-combustible à l'admission des cylindres comburants (2, 3) pour réaliser le réglage de charge du moteur, pour un régime donné, pour une grande partie de la plage du couple de fonctionnement de celui-ci.

3. Moteur à combustion interne selon la revendication 1 ou 2, **caractérisé en ce que** les chambres de travail (C2, C3) des cylindres comburants (2, 3) comprennent des moyens d'injection directe du combustible dans l'air comprimé au cours de la course de compression pour des rapports masse d'air divisée par masse de combustible variables et commandés en fonction de la charge du moteur, les chambres de travail (C2, C3) des cylindres comburants haute pression (2, 3) étant équipées d'un moyen permettant d'enflammer le mélange air-combustible.

4. Moteur à combustion interne selon l'une des revendications 1 à 3, **caractérisé en ce qu'**il comprend des lumières d'échappement (21) aménagées dans le cylindre basse pression (1) pour effectuer, entièrement ou partiellement, l'échappement des gaz comburés contenus dans le cylindre (1), les lumières d'échappement étant découvertes par le piston (4) du cylindre basse pression (1) quand celui-ci se trouve proche de son point mort bas.

5. Moteur à combustion interne selon l'une des revendications 1 à 4, **caractérisé en ce que** les tubulures de transvasement (16, 17) comprennent chacune une soupape de transvasement auxiliaire supplémentaire (23, 24) associée à la culasse (1a) du cylindre basse pression (1) et s'ouvrant approximativement de façon synchrone avec la soupape de transvasement principale (9, 11) de la même tubulure de transvasement (16, 17) associée à la culasse (2a, 3a) du cylindre comburant (2, 3).

6. Moteur à combustion interne selon l'une des revendications 1 à 5, **caractérisé en ce qu'**il comprend cinq cylindres rangés en ligne, comprenant trois cylindres comburants haute pression (2, 3) et deux cylindres basse pression (1), deux cylindres comburants (2) se trouvant aux extrémités de l'arbre vilebrequin auquel sont reliés les deux pistons (5) de ces cylindres, le troisième cylindre comburant haute pression (3) se trouvant au milieu et pouvant communiquer avec les deux cylindres basse pression adjacents (1) par respectivement au moins une soupape (11) et une tubulure de transvasement (17) de façon à transférer simultanément, lors de la deuxième détente, les gaz comburés contenus dans le cylindre comburant central (3) dans les deux cylindres basse pression (1) qui lui sont associés, et **en ce que** ces même cylindres basse pression (1) reçoivent au cours du tour de vilebrequin suivant lors du déplacement du piston vers son point mort bas l'entièreté des gaz comburés contenus dans le cylindre comburant (2) se trouvant à l'extrémité du vilebrequin et à côté du cylindre basse pression (1) en question.

7. Moteur à combustion interne selon l'une des revendications 1 à 5, **caractérisé en ce qu'**il comprend un nombre impair, supérieur à cinq, de cylindres rangés en ligne de façon qu'aux extrémités du vilebrequin de celui-ci se trouvent deux cylindres comburants haute pression (2) et de façon que les autres cylindres comburants haute pression (3) se trouvent entre deux cylindres basse pression (1) et puissent communiquer avec les deux cylindres basse pression adjacents. (1) par respectivement au moins une soupape et une tubulure de transvasement de façon à transférer simultanément, lors de la deuxième détente, les gaz comburés contenus dans le cylindre comburant (3) vers les deux cylindres basse pression (1) qui lui sont associés.

## Patentansprüche

1. Innerer Verbrennungsmotor des Typs mit mindestens einen Zylinder (2, 3), der eine Arbeitskammer (C2, C3) mit variablen Volumen, je nach Verlagerung des Kolben (5, 6) in den Zylinder (2, 3) in einer Stellung zwischen einen oberen und unteren Totpunkt, unter Wirkung der in der besagten Kammer erzeugten Druckkräfte an jedem Zylinder (2, 3) entsprechende Einlass- und Auslassmöglichkeiten einer gasförmigen Flüssigkeit, der Kolben eines jeweiligen Zylinders angeschlossen à einer Kurbelwelle, enthält der besagte Motor:
- einerseits, ein Zylinder (1) der nach einem Zwei-Takt Modus als Niederdruckzylinder funktioniert, der einen Einlass zusammen mit der Expansion eine sinnvolle Arbeit während jedem Niederdruck (1) Kolbenrennen nach seinem unteren Totpunkt und des Auslasses einer gasförmigen Flüssigkeit während jedem Kolbenrennen nach seinem oberen Totpunkt durchführt und,
- anderseits, zwei Zylinder (2, 3) die als Verbrennungszylinder nach einem Vier-Takt Modus funktionieren, die einen Lufteinlass oder eine Luft-Brennstoff Mischung während des ersten Kolbenrennen jedes Verbrennungszylinders (2, 3) nach dessen unteren Totpunkt enthalten, die Verdrängung dieser Luft oder der Luft-Brennstoff Mischung in einem Verbrennungszylinder während des ersten Kolbenrennens nach seinem oberen Totpunkt, Überlebung der Verbrennung, die Entspannung der verbrannten Gase während des zweiten Kolbenrennen nach seinem Totpunkt produziert eine nutzvolle Arbeit und die Austrittseite der verbrannten Gase während dem zweiten Kolbenrennen nach seinem Totpunkt, der Niederdruck Zylinder (1) verbindbar mit den zwei Verbrennungszylinder (2, 3) mit jeweils mindestens einem Ventil (9, 11) und eine Abfüllstutze (16, 17), der Hubraum der jeweiligen Verbrennungszylinder (2, 3) unterliegt dem der Niederdruck Zylinder (1), die Verbrennungszylinder (2,3) schlagen wechselweise ihre verbrannten Gase nach dem Niederdruck Zylinder zu einer zweiten Entspannung der Verbrennungsgase und deren Auslass aus dem Motor,
- und eine Aufladungsmöglichkeit der Verbrennungszylinder (2, 3) mit einem Turbolader gestaltet, die Übersetzung der Verdrängungsverdichtung der Verbrennungszylinder (2, 3) sind sehr schwach um somit stark Aufgeladen werden zu können, **dadurch gekennzeichnet dass** der Turbokompressor bei Annahme des Verbrennungszylinder (2, 3) die Vorverdichtung (Kompression) der Luft oder der Luft-Brennstoff Mischung erstellt, gegebenenfalls bis zu drei verschiedene nicht simultan angetrieben Stutzen (19, 25, 31) abkühlt die während des Zylinderrennens (4) des Niederdruck Zylinder (1) nach seinem oberen Totpunkt in Eingangsrichtung der Turbine (32) die im Niederdruck enthaltenen verbrannten Gase ausschlägt, außer die letzte sind alle Stutzen (19, 25) jeweils mit einem Umleitungsventil (27, 28) vorgesehen der die verbrannten Gase je nach Belastung des Motors einzeln leitet und die im offenen Zustand die verbrannten Gase aus dem Niederdruck Zylinder (I) sofort nach dem Auslass leitet und im geschlossenem Zustand, das Umleitungsventil (27, 28) dieselben verbrannten Gase (27, 28) nach einem Sammler verbrannter Gase (29) zum Turbineneingang (32) führt da die letzte Auslassstutzen (31) als erstes mit der Arbeitskammer (C1) des Niederdruckszylinder (1) in Verbindung tritt

2. Innerer Verbrennungsmotor gemäß Anforderung 1 **gekennzeichnet durch** eine Steuerungsmöglichkeit des Luft Aufladungsdruck oder der Luft-Brennstoff Mischung bei Annahme in den Verbrennungszylindem (2, 3) um die Motorbelastungseinstellung für einen großen Teil dessen Drehmomentantrieb herzustellen.

3. Innerer Verbrennungsmotor gemäß Anforderung 1 oder 2 **gekennzeichnet dadurch dass** die Arbeitskammern (C2, C3) des Verbrennungszylinders (2, 3) direkte Einspritzmöglichkeiten des Brennstoffes in die Druckluft während des Druckrennens zur Übersetzung der Luftmasse durch die variable und, je nach Motorbelastung geleitetet Brennstoffmasse durchführen kann, die Arbeitskammern (C2, C3) der Hochdruck Verbrennungszylinder (2, 3) mit einer Luft-Brennstoff Mischung Zündung ausgestattet ist.

4. Innerer Verbrennungsmotor gemäß einer der Anforderungen 1 bis 3, **gekennzeichnet dadurch dass** es mit, im Niederdruck Zylinder (1) montierte Auslasslichter (21) ausgestattet ist um ganz oder teilweise den Auslass der im Zylinder (1) enthaltenen verbrannten Gase zu ermöglichen, die Auslasslichter werden vom Kolben (4) des Niederdruck Zylinder (1) freigesetzt wenn dieser sich nahe seines Totpunkt befindet.

5. Innerer Verbrennungsmotor gemäß einer der Anforderungen 1 bis 4, **gekennzeichnet dadurch dass** die Abfüllstutzen (16, 17) jeweils einen zusätzlichen Hilfsumfiillungsventil (23, 24) an einem Zylinderdeckel (1a) des Niederdrucks Zylinder (1) verbunden enthalten und der sich einigermaßen synchron mit dem Hauptumfüllungsventil (9, 11) der gleichen Abfüllstutze (16, 17) verbunden mit dem Zylinderdeckel (1a) des Niederdrucks Zylinder (1) öffnet.

6. Innerer Verbrennungsmotor gemäß einer der Anforderung 1 bis 5, **gekennzeichnet dadurch dass** er, in einer Reihe angelegt, fünf Zylinder wovon drei Hochdruck Verbrennungszylinder (2. 3) und zwei Niederdruck Zylinder (1) enthält, zwei Verbrennungszylinder (2) befinden sich am Ende der Kurbelwelle an welcher die beiden Kolben (5) des Zylinders angeschlossen sind, der dritte Hochdruck Verbrennungszylinder (3) befindet sich in die Mitte und ist kommunizierbar mit den zwei anliegenden Niederdruck Zylinder (1) durch jeweils mindestens ein Ventil (11) und eine Umfüllstutze (17) sodass, bei der zweiten Entspannung, die im zentralem Verbrennungszylinder (3) enthaltenen verbrannten Gase simultan in die zwei Niederdruck Zylinder (1) die ihm angebunden sind umgefüllt werden können, und dass diese gleichen Niederdruck Zylinder (1) während der nächsten Kurbelwellendrehung bei der Bewegung des Kolben nach seinem nieder Totpunkt die gesamten, in den sich am Endstück der Kurbelwelle und neben des besagten Niederdruck Zylinder (1) befindlichen Verbrennungszylinder enthaltenen, verbrannten Gase (2) empfängt.

7. Innerer Verbrennungsmotor gemäß einer der Anforderungen 1 bis 5, **gekennzeichnet dadurch dass** es mit einer ungeraderen Anzahl, größer als fünf, aneinander gereiht sodass sich am Endstück der Kurbelwelle zwei Hochdruck Verbrennungszylinder (2) befinden und die anderen Hochdruck Verbrennungszylinder (3) sich zwischen zwei Niederdruck Zylinder (1) befinden und mit beiden angrenzenden Niederdruck Zylinder (1) über jeweils mindestens ein Ventil und eine Abfüllstutze kommunizieren können sodass bei der zweiten Entspannung die im Verbrennungszylinder (3) enthaltenen verbrannten Gase zum entsprechendem Niederdruck Zylinder (1) geführt werden.

## Claims

1. Internal combustion engine of the type comprising at least one cylinder (2, 3) comprising a work chamber (C2, C3) which volume varies further to the movement in the cylinder (2, 3) of a piston (5, 6) between a position of top dead centre and a position of bottom dead centre, under the effect of pressure forces periodically generated in said work chamber, to each cylinder (2, 3) being associated admission and evacuation means of a gaseous fluid, the piston of each cylinder being linked to an engine crankshaft, said engine comprising:
• on the one hand, a cylinder (1) acting as a low-pressure cylinder in a two-stroke mode which include the admission accompanied by the expansion producing a useful work during each lift of the piston of the low-pressure cylinder (1) to its bottom dead centre and the exhaust of a gaseous fluid during each lift of the piston towards its top dead centre, and
• on the other hand, two cylinders (2, 3) acting as combustion cylinders in a four-stroke mode which include the admission of air or of a mixture air-fuel during the first lift of the piston of each combustion cylinders (2, 3) to its bottom dead centre, the compression of said air or said mixture air-fuel in the combustion cylinder during the first lift of the piston to its top dead centre, followed by the combustion, the expansion of the gases of combustion during the second lift of the piston to its bottom dead centre producing a useful work and the delivery of the gases of combustion during the second lift of the piston to its top dead centre, the low-pressure cylinder (1) being able to communicate with the two combustion cylinders (2, 3) by means of at least one valve (9, 11) and a decanting manifold (16, 17), respectively, the swept volume of each combustion cylinders (2, 3) being smaller than that of the low-pressure cylinder (1), the combustion cylinders (2, 3) delivering alternatively their gases of combustion to the low-pressure cylinder (1) for the purpose of a second expansion of the combustion gases and their exhaust from the engine,
• and a means for supercharging the combustion cylinders (2, 3) composed of a turbo compressor unit, the volume compression ratio of the combustion cylinders (2, 3) being relatively low so as it can be highly supercharged, wherein when the turbo compressor unit carries out, at the moment of admission of the combustion cylinders (2, 3), the pre-compression of the air or of the mixture air-fuel, if necessary cooled by means of a heat exchanger (15), up to three non-simultaneously supplied different manifolds (19, 25, 31) deliver, during the lift of the piston (4) of the low-pressure cylinder (1) to its top dead centre, in direction of the inlet of the turbine (32), the combustion gases contained in the low-pressure cylinder (1), each manifold, except the last one, (19,25) each including a by-pass valve (27, 28) of the combustion gases which is individually controlled according to the charge of the engine and which, when it is in its open position, guides the combustion gases coming from the low-pressure cylinder (1) directly to the exhaust whereas when it is in its closed position, said by-pass valve (27, 28) guides said combustion gases to the collector of the combustion gases (29) located at the inlet of the turbine (32), the last exhaust manifold (31) being the first one in contact with the work chamber (C1) of the low-pressure cylinder (1).

2. Internal combustion engine according to claim 1 compressing a means of control of the supercharge pressure of air or of the mixture air-fuel at the intake of the combustion cylinders (2, 3) in order to carry out the adjustment of the engine load, for a given speed, largely of the range of the functioning torque thereof.

3. Internal combustion engine according to any one of claims 1 or 2 wherein the work chambers (C2, C3) of the combustion cylinders (2, 3) comprise direct injection means of the fuel into the compressed air during the compression stroke in respect of variable ratios of air mass divided by fuel mass and controlled according to the engine load, the work chambers (C2, C3) of the high pressure combustion cylinders (2, 3) being provided with a means allowing the ignition of the air-fuel mixture.

4. Internal combustion engine according to any one of claims 1 to 3 wherein it comprises exhaust ports (21) arranged in the low-pressure cylinder (1) in order to, totally or partially, carry out the exhaust of the gases of combustion contained in the cylinder (1), the exhaust ports being uncovered by the piston (4) of the low-pressure cylinder (1) when said cylinder is closed to its bottom dead centre.

5. Internal combustion engine according to any one of claims 1 to 4 wherein each of the decanting manifolds (16, 17) comprises an auxiliary by-pass valve (23, 24) associated with the cylinder head (1a) of the low-pressure cylinder (1) and opening approximately synchronously with the main decanting valve (9, 11) of the same decanting manifold (16, 17) associated with the cylinder head (2a, 3 a) of the combustion cylinder (2, 3).

6. Internal combustion engine according to any one of claims 1 to 5 wherein it comprises five cylinders lined up, including three high-pressure combustion cylinders (2, 3) and two low-pressure cylinders (1), two combustion cylinders (2) being located at the ends of the crankshaft to which the two pistons (5) of said cylinders are linked, the third high pressure combustion cylinder (3) being located in the middle and being able to communicate with the two adjacent low-pressure cylinders (1) by means of at least one valve (11) and one by-pass valve (17), respectively, so as to simultaneously transfer, during the second expansion phase, the combustion gases contained in the central combustion cylinder (3) into the two low-pressure cylinders (1) which are associated therewith, and wherein said low-pressure cylinders (1) receive, during the next crankshaft turn, during the motion of the piston to its bottom dead centre, the whole of the combustion gases contained in the combustion cylinder (2) located at the end of the crankshaft and closed to the low-pressure cylinder (1) in question.

7. Internal combustion engine according to any one of claims 1 to 5 wherein it includes an odd number, greater than five, of lined up cylinders so that at the ends of its crankshaft are located two high-pressure combustion cylinders (2) and so that the other high-pressure combustion cylinders (3) are located between two low-pressure cylinders (1) and can communicate with the two adjacent low-pressure cylinders (1) respectively by means of at least one valve and a decanting manifold so as to simultaneously transfer, during the second expansion phase, the combustion gases contained in the combustion cylinder (3) to the two low-pressure cylinders (1) which are associated therewith.
